## Europäisches Patentamt
## European Patent Office
## Office européen des brevets

(11) Numéro de publication: **0 082 770**
**A1**

# (12) DEMANDE DE BREVET EUROPEEN

(21) Numéro de dépôt: **82402304.8**

(22) Date de dépôt: **15.12.82**

(51) Int. Cl.³: **G 01 S 1/04**
**G 01 S 1/56**

(30) Priorité: **18.12.81 FR 8123733**

(43) Date de publication de la demande:
**29.06.83 Bulletin 83/26**

(84) Etats contractants désignés:
**DE GB IT NL**

(71) Demandeur: **THOMSON-CSF**
**173, Boulevard Haussmann**
**F-75379 Paris Cedex 08(FR)**

(72) Inventeur: **Letoquart, Bruno**
**THOMSON-CSF SCPI 173, bld Haussmann**
**F-75379 Paris Cedex 08(FR)**

(74) Mandataire: **Benoit, Monique et al,**
**THOMSON-CSF SCPI 173, Bld Haussmann**
**F-75379 Paris Cedex 08(FR)**

(54) **Système d'atterrissage hyperfréquence à stations site et azimut séparées.**

(57) L'invention se rapporte à un système d'atterrissage hyperfréquence ou MLS, dans lequel les deux stations dite station azimut et station site sont séparées géographiquement d'une distance pouvant ête importante, de l'ordre de plusieurs kilomètres. Chacune des stations azimut et site émettant un message constitué par un préambule identifiant la nature de message angulaire qui suit, on rend suivant l'invention une des stations maître, l'autre devenant esclave, en faisant émettre par une seule station, la station maître, les préambules des deux messages, la station esclave n'émettant plus que son information angulaire spécifique.

FIG_6

1

# SYSTEME D'ATTERRISSAGE HYPERFREQUENCE
# A STATIONS SITE ET AZIMUT SEPAREES

La présente invention est relative aux systèmes d'atterrissage hyperfréquence à stations site et azimut séparées.

On sait que le système d'atterrissage hyperfréquence, MLS suivant la terminologie anglo-saxonne pour Microwave Landing System, a été retenu par l'organisation de l'aviation civile internationale (OACI) pour succéder au système d'atterrissage aux instruments ou ILS pour Instrument Landing System, en tant que système d'aide à l'atterrissage dans le monde pour la prochaine décennie.

Dans ce qui suit on rappelle le principe du MLS. Ce système est destiné à fournir à l'avion sa position en coordonnées sphériques dans un repère lié à la piste d'atterrissage, c'est-à-dire l'angle d'azimut et l'angle de site. La distance de l'avion est fournie par un équipement auxiliaire de mesure de distance, connu sous l'abréviation DME pour Distance Measurement Equipment et qui fonctionne sur une fréquence différente.

Les angles d'azimut et de site sont émis sur une même fréquence voisine de 5 GHz par des stations au sol proches de la piste et un récepteur approprié permet de mesurer ces angles à bord de l'aéronef utilisant le système.

Les angles d'azimut et de site sont émis en partage de temps sur la même fréquence porteuse et la mesure est du type anamétrique, c'est-à-dire qu'elle est effectuée à bord des divers aéronefs utilisant le système et ce d'une manière indépendante à partir d'une émission au sol.

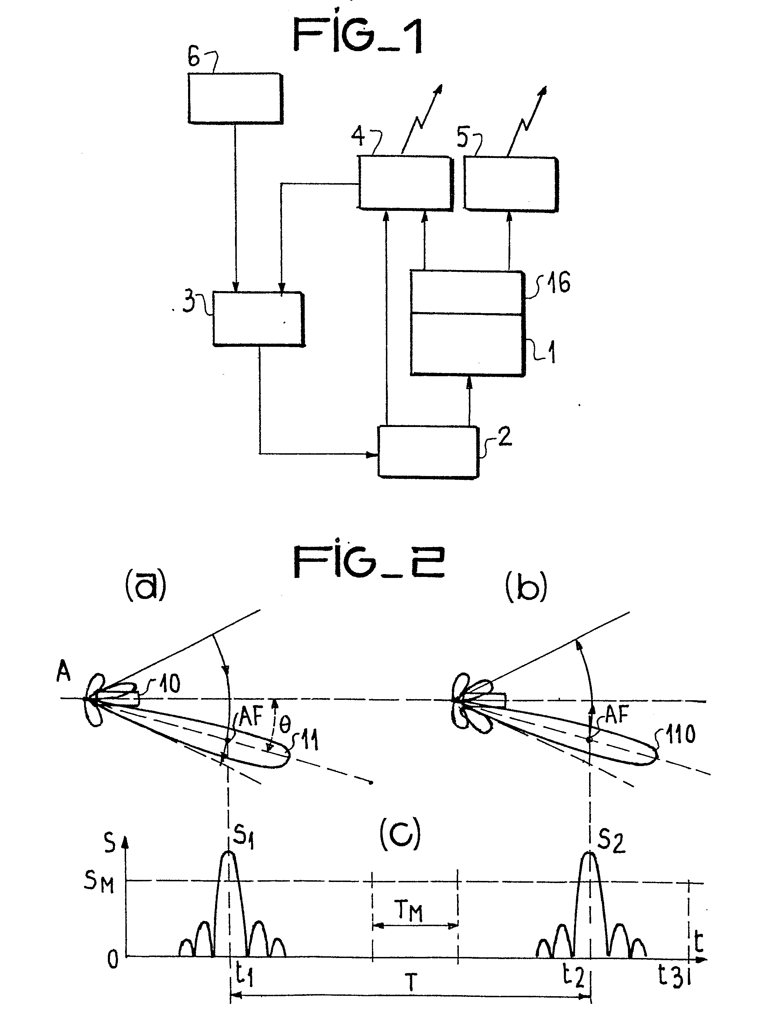

Chaque station, azimut ou site, dont un synoptique est donné figure 1, comporte un émetteur 1 avec un commutateur d'antennes 16, piloté par un dispositif électronique de commande 2 et un moniteur interne 3 contrôlant la qualité de l'émission, une antenne à balayage électronique 4 et une antenne dite sectorielle 5, un moniteur externe 6 est prévu également contrôlant la qualité du signal rayonné. L'information angulaire site ou azimut est produite par un faisceau en éventail 11 étroit suivant la coordonnée angulaire considérée balayant en aller et retour tout le secteur angulaire de la couverture, à vitesse angulaire V constante et la position angulaire d'un avion est déterminée à bord en mesurant l'intervalle de temps entre la réception des passages du faisceau à l'aller et au retour. Cet intervalle de temps est une fonction linéaire de la position angulaire de l'avion et l'information angulaire $\theta$ est égale à V/2 (To - T) expression dans laquelle, V est la vitesse angulaire constante du balayage du secteur angulaire considéré par le faisceau de l'antenne, T l'intervalle de temps entre la réception des passages aller et retour du faisceau et To la valeur de l'intervalle de temps T pour un angle $\theta$ nul. To et V sont des constantes définies par les normes internationales sur le MLS. Chaque coordonnée angulaire, azimut et site, est dans ce système émise à l'aide d'une antenne spécifique. Il y a donc au moins deux antennes de préférence à balayage électronique dans un système d'atterrissage MLS. Les émissions sur les antennes site, azimut sont multiplexées dans le temps ainsi que les informations d'identification et diverses données sur le système qui, elles, sont rayonnées dans tout le volume de la couverture angulaire par des antennes dites sectorielles.

La figure 2 donne la représentation du principe de la mesure d'angle tel qu'il vient d'être décrit, dans le cas de l'angle d'azimut.

La figure 2a montre le balayage du faisceau "aller". Ce faisceau est repéré par 11 et a pour origine un point A proche de l'extrémité de la piste 10 où est localisée l'antenne qui le produit. On a figuré également en plus du lobe principal qui constitue le faisceau étroit de mesure des lobes secondaires. On suppose que le faisceau 11 passe à un instant donné sur l'aéronef AF. Si l'on se reporte à la figure 2c qui donne une représentation du signal S obtenu en fonction du temps, on constate que le signal S1 donné par le faisceau aller apparaît à un temps t1 et qu'il dépasse un seuil dit de mesure SM fixé à l'avance. On a reporté sur la partie droite de la figure 2 le faisceau 110 dit faisceau retour qui a bien évidemment même origine A que le faisceau aller 11. Le signal S2 quand le faisceau retour 110 passe sur l'aéronef AF apparaît sur la figure 2c, au temps t2. On précise que par convention, le temps t1 et/ou t2 correspond au milieu du signal reçu S1 ou S2. Ce temps en fait, peut aisément correspondre au milieu de la largeur du signal considéré à -3 ou -6 dB par rapport à sa valeur maximale. Le temps O à l'origine des temps correspond au début du balayage aller du faisceau tandis que le temps t3 correspond à la fin du balayage retour. L'intervalle de temps séparant t2 de t1 est égal à T. Un temps mort TM d'arrêt du balayage est observé entre la fin du balayage aller et le début du balayage retour.

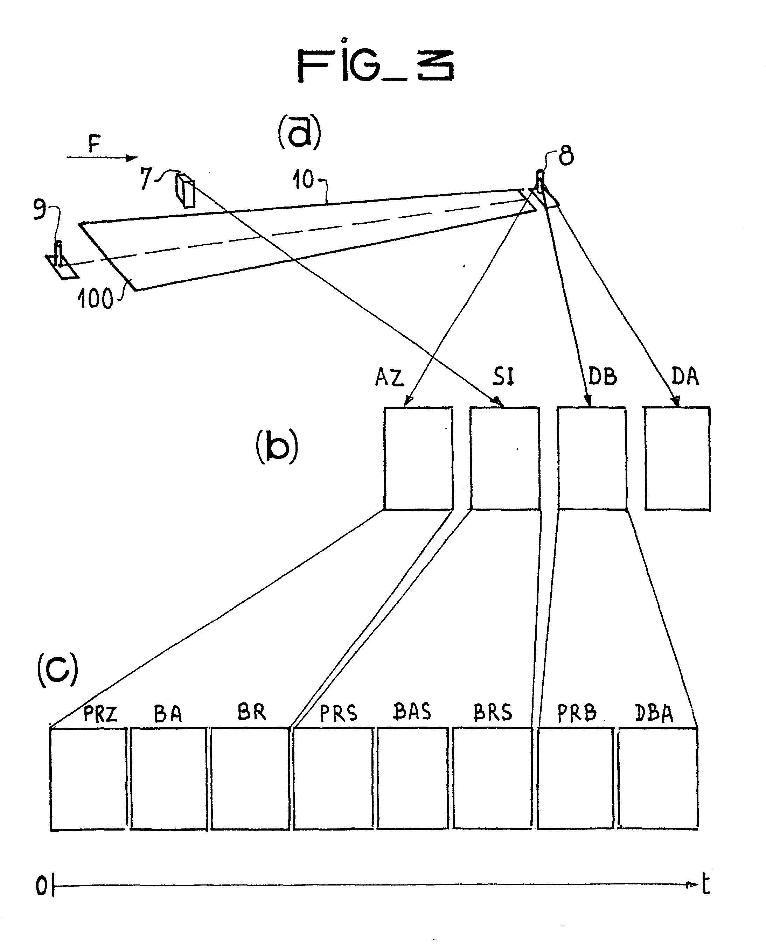

La figure 3 représente dans son principe, le multiplexage des fonctions dans le temps pour une station MLS complète. On voit sur cette figure, dans la partie (a), comment sont disposées les stations : la station site 7 proche du seuil de piste et la station azimut avant 8 proche de l'extrémité de piste. La figure 3a présente également une station azimut arrière 9 proche du seuil 100 de la piste 10, cependant cette station n'est pas utilisée de façon courante.

Sur la partie (b) de la figure 3, on a figuré les informations que les différentes stations énumérées précédemment émettent en partage de temps sur la même fréquence. La station azimut 8 fournit l'information azimut avant AZ ainsi que des données de base DB et des données auxiliaires DA et la station site fournit une information de site SI. La partie (c) de la figure 3 donne une représentation plus détaillée en fonction du temps des informations énumérées dans la partie (b). L'information azimut avant AZ comporte un préambule PRZ, le balayage aller BA et le balayage retour BR. Le préambule a pour rôle principal de donner l'identité, azimut ou site de l'émission qui le suit immédiatement. L'information site, SI comporte ainsi, également un préambule PRS, un balayage aller BAS·et un balayage retour BRS. L'information données de base DB comporte également un préambule PRB et les données elles-mêmes DBA. Quant à l'information données auxiliaires, il en est de même que pour l'information données de base mais elle n'a pas été représentée sur la figure 3c. Bien évidemment, aussi bien dans la figure 3b que dans la figure 3c, les différentes informations imagées sont ordonnées par rapport au temps t dont l'axe est représenté par ot.

On notera que les données dites de base sont des données jugées indispensables opérationnellement pour poser un avion sur la piste. Les données dites auxiliaires sont des données supplémentaires pour des opérations particulières. Les données de base par exemple fournissent à l'aéronef des informations sur la géométrie et les caractéristiques du système d'atterrissage. Ces données sont émises par l'antenne sectorielle 5 et le signal correspondant comporte un préambule PRB et les données proprement dites émises en modulation de phase différentielle DPSK.

On rappelle que le préambule a pour rôle principal de donner l'identité, azimut ou site, principalement, de l'émission qui le suit immédiatement. Un préambule quel qu'il soit, est émis par une antenne sectorielle 5 qui rayonne dans l'ensemble de la couverture du système. Le codage de ce préambule est généralement effectué en modulation de phase différentielle (DPSK pour differential phase shift keying en terminologie anglo-saxonne). L'information angulaire proprement dite, elle, est émise par une antenne 4 à faisceau battant à balayage électronique.

Dans la pratique les stations azimut et site, pour des raisons opérationnelles se trouvent distantes de plusieurs kilomètres l'une de l'autre, étant, comme on l'a dit précédemment, l'une la station azimut proche de l'extrémité de la piste et l'autre, la station site, proche du seuil de la piste. On peut préciser que ces notions sont relatives au sens d'atterrissage des avions : si la piste est équipée dans les deux sens, il y a deux ensembles MLS azimut et site totalement indépendants. Le fonctionnement en temps partagé sur une même fréquence, impose donc une liaison de synchronisation en temps entre les deux stations. Il est de la sorte nécessaire d'avoir pour chaque station, azimut ou site, une antenne sectorielle et une antenne à balayage électronique, l'antenne sectorielle d'une station émettant le préambule de la fonction correspondante.

Une antenne sectorielle étant ainsi nécessaire à chaque station, site et azimut, on constate en fait que pour un système complet, il y a duplication de certains éléments coûteux.

L'invention se propose de réduire la complexité qui découle de cette duplication ainsi que le coût, pour la station site en particulier, en faisant émettre les préambules des fonctions site et azimut ainsi que la fonction données de base par une seule et même antenne sectorielle, celle de la station azimut en l'occurrence.

Un avantage immédiat qui résulte de l'invention, est que pour la station site on élimine au moins l'antenne sectorielle, le commutateur d'antenne et le modulateur de phase. On notera dès maintenant que les préambules peuvent tout aussi bien être émis par l'antenne sectorielle site, auquel cas ce serait la station azimut qui serait allégée.

Suivant l'invention, un système d'atterrissage hyperfréquence à stations site et azimut séparées fournissant à un aéronef sa position en coordonnées sphériques, angle d'azimut et angle de site, dans un repère lié à la piste, par émission d'un message azimut et d'un message site comportant chacun un préambule donnant l'identité du message qui suit et le message information angulaire proprement dit, est caractérisé en ce que, une seule des deux stations, émet, en plus de son message spécifique le préambule du message spécifique de l'autre station, l'émission de ce préambule étant associée à l'émission d'un signal de synchronisation à destination de la station émettant ensuite le message d'information angulaire correspondant audit préambule.

D'autres caractéristiques et avantages de l'invention apparaîtront au cours de la description qui suit d'un exemple de réalisation donné à l'aide des figures qui, outre les figures 1, 2 et 3 relevant de l'art antérieur représentent :

- la figure 4, un diagramme schématique du système suivant l'invention ;

- la figure 5, une représentation temporelle des signaux émis par le système MLS ;

- la figure 6, une représentation schématique définissant les

temps T0 et T1 ;

- la figure 7, une représentation schématique de l'organisation du système MLS dans laquelle on tient compte de la longueur du câble de liaison transmettant le top de synchronisation de l'émission du préambule site ;

- la figure 8, une représentation schématique du système pour deux positions différentes de l'aéronef qui l'utilise ;

- la figure 9, une représentation schématique du dispositif suivant l'invention avec trois stations ;

- la figure 10, une représentation temporelle des signaux émis suivant l'invention avec trois stations.

On a vu dans la description qui précède, qu'il est normal dans un système d'atterrissage hyperfréquence connu sous les initiales MLS de son nom en langue anglaise Microwave Landing System, dans lequel les stations site et azimut sont séparées, quelquefois de plusieurs kilomètres, que chaque station émette par une antenne sectorielle le préambule du message site ou azimut qu'elle envoie à destination des aéronefs qui utilisent le système et qui pourront par des mesures effectuées à bord se localiser par rapport au sol, plus spécifiquement par rapport à la piste.

On a vu également que chaque station, pour remplir la fonction qui lui est dévolue, doit comporter une antenne à balayage électronique et une antenne sectorielle, un émetteur, une électronique de commande, un système moniteur externe et interne et que l'émetteur était constitué par les éléments suivants, un générateur de fréquence de l'ordre de 5 GHz, un modulateur de phase 0-π destiné à générer les messages codés en phase DPSK du préambule, un amplificateur de puissance, un commutateur d'antennes destiné à aiguiller la puissance de l'émetteur, soit vers l'antenne sectorielle, émettant le préambule, soit vers l'antenne à balayage électronique émettant l'information angulaire correspondante, ce suivant les instants de la séquence temporelle adoptée.

Il faut ajouter à ce qui précède, une liaison de synchronisation en temps entre les deux stations pour que les émissions site et azimut ne se recouvrent pas, les stations site et azimut fonctionnant sur la même fréquence en temps partagé.

Pour des raisons visant à l'élimination à l'une des deux stations d'un matériel généralement coûteux, élimination qui diminue la complexité de la station considérée, on propose suivant l'invention d'émettre les préambules des deux messages site et azimut, par une seule et même station, l'autre station n'émettant plus que l'information de balayage angulaire qui lui est spécifique. Du point de vue de la réalisation, cette disposition, comme on l'a déjà mentionné, permet de supprimer à la station n'émettant plus qu'une information de balayage angulaire, l'antenne sectorielle destinée à émettre un préambule, le modulateur de phase destiné à coder ce préambule et le commutateur d'antennes destinés à passer de l'antenne sectorielle à l'antenne à balayage électronique émettant, elle, l'information de balayage angulaire. Toutefois la simplification d'une des stations n'entraîne pas une complication correspondante de l'autre station qui subit peu de modifications. Seule, la liaison de synchronisation entre les deux stations doit être plus précise ; de fait son rôle n'est plus simplement d'assurer comme cela a été dit, le non recouvrement des fonctions azimut et site, mais d'assurer une valeur correcte à l'intervalle de temps To, qui sépare les deux évènements suivants :
- référence de temps du préambule constituée actuellement par convention par la dernière transition 0 . 1 du code Barker 11101 ;
- milieu des balayages aller et retour défini dans l'antenne à balayage électronique site dans le cas où le préambule site est émis par l'antenne sectorielle azimut.

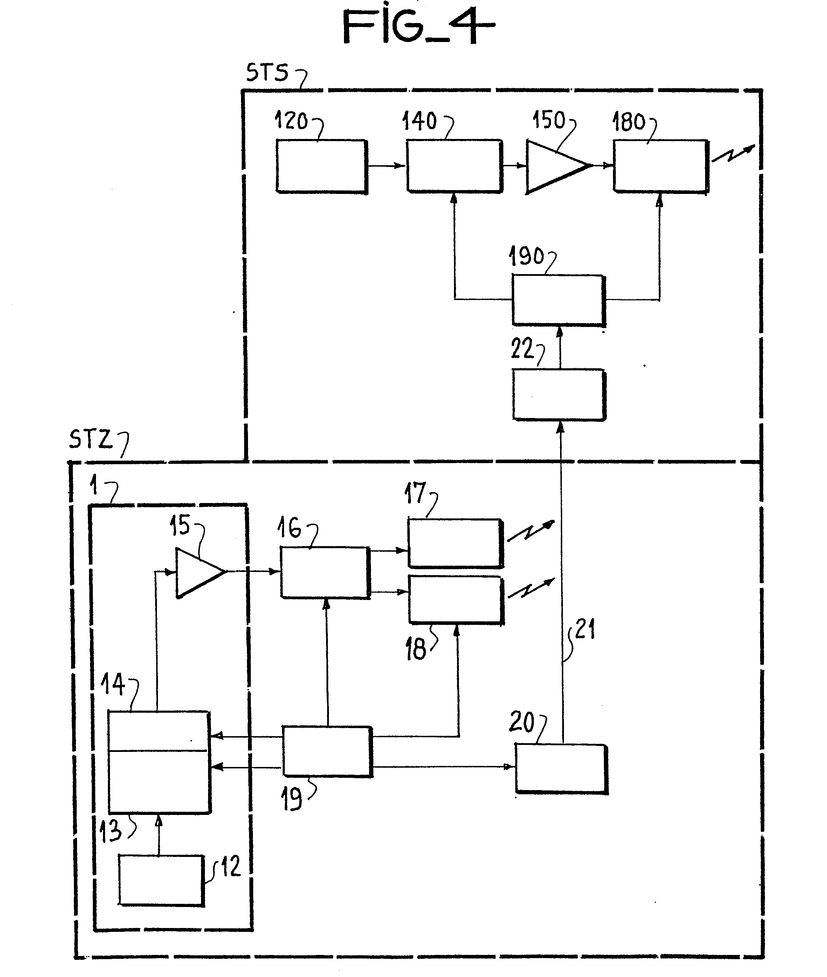

La figure 4 représente le diagramme schématique du système d'atterrissage suivant l'invention. On notera pour la commodité de la description que c'est la station azimut qui a été choisie pour émettre les préambules des fonctions azimut et site, mais la station site aurait pu tout aussi bien être choisie à sa place.

Sur la figure 4, on voit, représentées très schématiquement, la station azimut STZ et la station site STS.

La station STZ comporte un générateur 12 de fréquence, de 5 GHz par exemple, alimentant un modulateur de phase 13 avec un commutateur arrêt-marche 14, un amplificateur de puissance 15 connecté à un commutateur d'antennes 16, assurant la mise en fonction d'une antenne sectorielle 17 ou d'une antenne à balayage électronique 18, qui en l'occurrence dans l'exemple traité est à balayage dit azimut. L'ordre des éléments 13-14-15 n'est pas impératif, une réalisation différente peut s'accommoder d'un ordre différent de celui-là. Une électronique de commande 19 contrôle les différents éléments qui ont été mentionnés. Cette électronique de commande contrôle également un circuit 20, émettant une impulsion dite de synchro site qui est envoyée par une liaison synchro 21 à la station site STS du système.

Celle-ci comprend un générateur de fréquence 120 de 5 GHz identique à celui de la station azimut STZ connecté à un commutateur arrêt-marche 140 suivi d'un amplificateur de puissance 150 connecté à une antenne à balayage électronique en site 180, une électronique de commande 190 contrôlant le commutateur d'arrêt-marche 140 et l'antenne à balayage électronique 180. Cette électronique de commande est connectée à un récepteur 22 dit de synchro, relié par la liaison 21 à l'émetteur 20 du signal de synchro site, appartenant à la station azimut STZ.Ces trois éléments 20-21 et 22 constituent le dispositif de synchronisation azimut-site.

Le fonctionnement d'un tel système est en de nombreux points semblable au fonctionnement des systèmes de l'art antérieur tel qu'il peut être trouvé dans les articles suivants :

- Le MLS un exemple d'utilisation du microprocesseur, de B. Létoquart et J.M. Skrzypczak, paru dans la revue "Navigation" d'avril 1981 ;

- The MLS in France paru dans la revue "Microwave Journal", may 1981, pages 113 à 120.

De fait dans la station azimut STZ l'ensemble émetteur qui comprend le générateur 12, le modulateur de phase 13 avec le commutateur d'arrêt-marche 14 et l'amplificateur de puissance 15 ainsi que le commutateur d'antennes 16 n'est pas modifié par rapport à l'ensemble émetteur 1 de l'art antérieur représenté figure 1. De plus, émettant le préambule de la fonction azimut, il est capable d'émettre le préambule site sous le contrôle de l'électronique de commande 19 qui, elle, est modifiée par rapport à l'électronique de commande de la figure 1, tout au moins dans son dispositif de séquencement en temps des différentes opérations à effectuer. En règle générale, un tel dispositif de séquencement est un microprocesseur qui, suivant l'invention, est modifié pour lui ajouter la génération du message préambule site. Ces modifications entraînent la génération du préambule site dans le modulateur de phase DPSK 13 et la commande du commutateur d'antenne 16. Par convention, la structure du préambule site est la même que celle du préambule azimut, au message d'identification DPSK près 1100001 pour le site, 0010100 ou bien 0011001 pour l'azimut. Toutefois, suivant l'inven- tion, l'émission du préambule site par l'antenne sectorielle de la station azimut n'est pas suivie à cette station, de l'émission de l'information de balayage angulaire site, qui est assurée par la station site après réception d'une impulsion de synchronisation. Dans le cas où le dispositif de séquencement est un microprocesseur, l'émission des deux préambules par une même antenne sectorielle, conduit à utiliser un même programme modifié somme suit :

Aux instants d'émission du préambule site PRS, on ajoute les instructions générant ce préambule. Les préambules PRZ et PRS étant identiques, au message d'identification D PSK près comme indiqué ci-dessus, ces instructions sont les mêmes pour les deux préambules PRS et PRZ, à une case mémoire près contenant le message d'identification site (1100001) à la place du message d'identification azimut (0010100 ou bien 0011001).

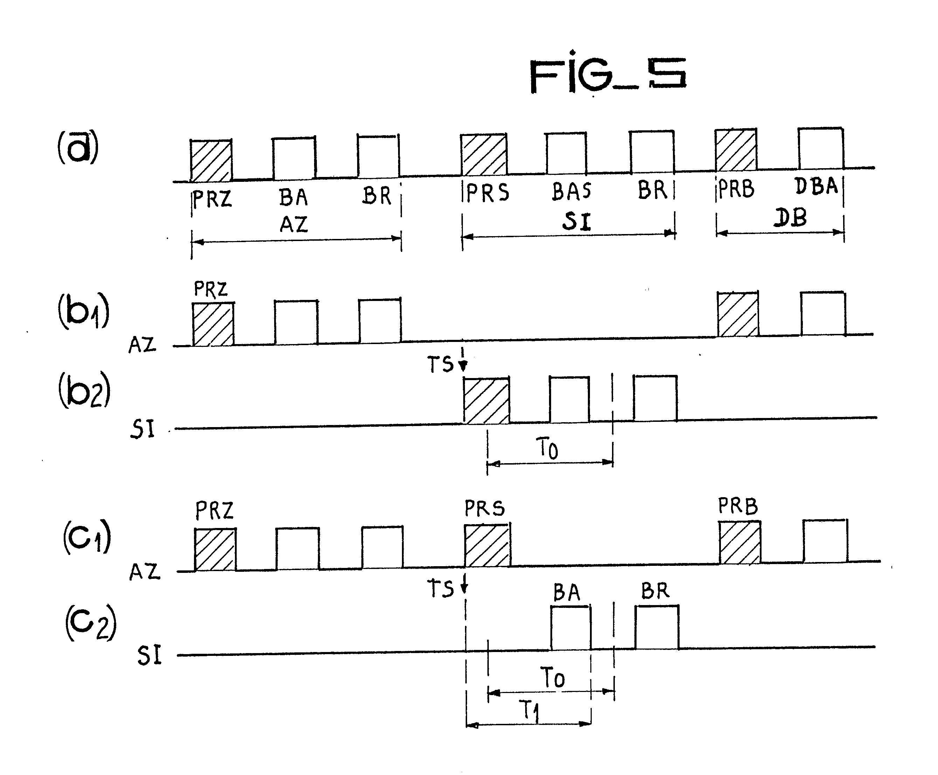

La figure 5 donne une représentation schématique temporelle des différents signaux émis par les stations d'un système MLS. La figure 5a représente le signal complet dans l'espace, le signal azimut AZ comportant le préambule PRZ et l'information angulaire imagée par le balayage aller BA et le balayage retour BR, suivi du signal site SI avec le préambule PRS et les balayages aller BAS et retour BRS, suivi dans le cas général du signal de données de base DB avec le préambule PRB et l'information données de base DBA. La figure 5b représente les signaux émis par les stations azimut et site suivant l'état de l'art. La figure 5b1 représente le signal AZ émis par la station azimut avec le top de synchronisation TS déterminant l'instant où la station site commence à émettre son message (figure 5b2). Le temps To indiqué est une donnée interne à la station site.

La figure 5c représente les signaux AZ et SI émis respectivement par la station azimut (5c1) et site (5c2) conformément à l'invention. On voit que la station azimut, en l'occurrence, émet le préambule du message site. On définit le temps To comme l'intervalle de temps qui sépare les deux évènements suivants :
- référence de temps du préambule constituée actuellement par convention par la dernière transition de phase 0-1 du code Barker 11101 ;
- milieu des balayages aller et retour de l'antenne à balayage électronique considérée, ici l'antenne à balayage site.

Le dispositif 20-21 et 22 de synchronisation azimut-site doit, lui, être capable de synchroniser avec une grande précision l'émission des messages azimut et site et ce, actuellement à $\pm$ 10 µs près. Ceci impose un dispositif de synchronisation à bande passante suffisante, plus de 20 kHz environ. La liaison 21 entre le dispositif de synchronisation 20 de la station azimut qui émet un top de synchronisation sous le contrôle de l'électronique de commande 19 au début du préambule site et un récepteur de synchronisation 22, à la station site STS est en général un câble coaxial. Le récepteur de synchro 22, comprend en général un circuit à seuil à -6 dB qui émet un top de référence à la station site, déterminant le début de l'émission du message d'information de balayage angulaire site par la station site. Cette liaison peut également être réalisée en ondes radio, auquel cas les dispositifs 20 et 22 sont remplacés par un émetteur et un récepteur. La fréquence de cette liaison radio peut être quelconque, et en particulier peut être égale à la fréquence de la station MLS considérée ; dans ce cas, le récepteur de la station site, en recevant l'émission préambule site PRS de la station STZ, utilisera cette information comme top de référence ; l'émetteur est dans ce cas la station STZ elle-même.

Cette liaison peut également être faite par des paires de conducteurs torsadés ou par des fibres optiques. Dans ce dernier cas les amplificateurs des dispositifs 20 et 22 sont remplacés par des diodes électroluminescentes et des photodiodes.

Le fonctionnement de la station site STS est simplifié par rapport à celui d'une station de l'art antérieur, puisque certains éléments sont supprimés, le modulateur de phase, le commutateur d'antennes et l'antenne sectorielle transmettant le préambule site qui est émis par la station azimut. Le récepteur de synchronisation 22 est modifié ainsi que cela a été indiqué plus haut. L'électronique de commande 190 est également simplifiée, puisque, selon l'invention, on y a supprimé la partie génération du préambule. Dans le cas où un microprocesseur est utilisé, c'est la partie du logiciel correspondant qui est supprimée. Une autre modification de l'électronique de commande 190 de la station site est à signaler, elle concerne le retard au démarrage du balayage électronique aller puis retour de l'information angulaire par rapport au préambule site émis par la station azimut. On a défini précédemment le temps To qui sépare les deux évènements successifs suivants : référence de temps du préambule constitué par la transition de phase 0-1 du code Barker 11101 et milieu des balayages aller et retour de l'antenne à balayage électronique site, ce temps To est imagé figure 6. On introduit le temps T1 séparant le front de montée du préambule site du début du balayage site. Les valeurs de To et de T1 sont bien définies par les normes internationales sur le MLS. L'électronique de commande 190 de la station site comprend soit un compteur logique, soit un compteur programmé dans le microprocesseur utilisé, qui définit cette valeur T1, à une correction $\Delta t$ près, explicitée ci-dessous. Le compteur sera câblé ou programmé à la valeur T1 - $\Delta t$.

De fait, le retard dans la transmission de la synchronisation doit être pris en compte et compensé. Un calcul relativement simple, dans le cas d'une transmission par câble coaxial 21 peut être donné. Le câble est utilisé en ligne de transmission adaptée, d'impédance caractéristique Zo. D'après les équations des lignes on sait que la vitesse de propagation v dans la ligne est donnée par :

$$v = \frac{1}{\sqrt{ek}} = \frac{Zo}{e} = \frac{1}{Zok}$$

expression dans laquelle Zo étant l'impédance caractéristique de la ligne e en est la self linéique et k la capacité linéique. En général, la vitesse de propagation dans un câble normalisé, utilisable, est de l'ordre des 2/3 de la vitesse des ondes électromagnétiques dans l'air.

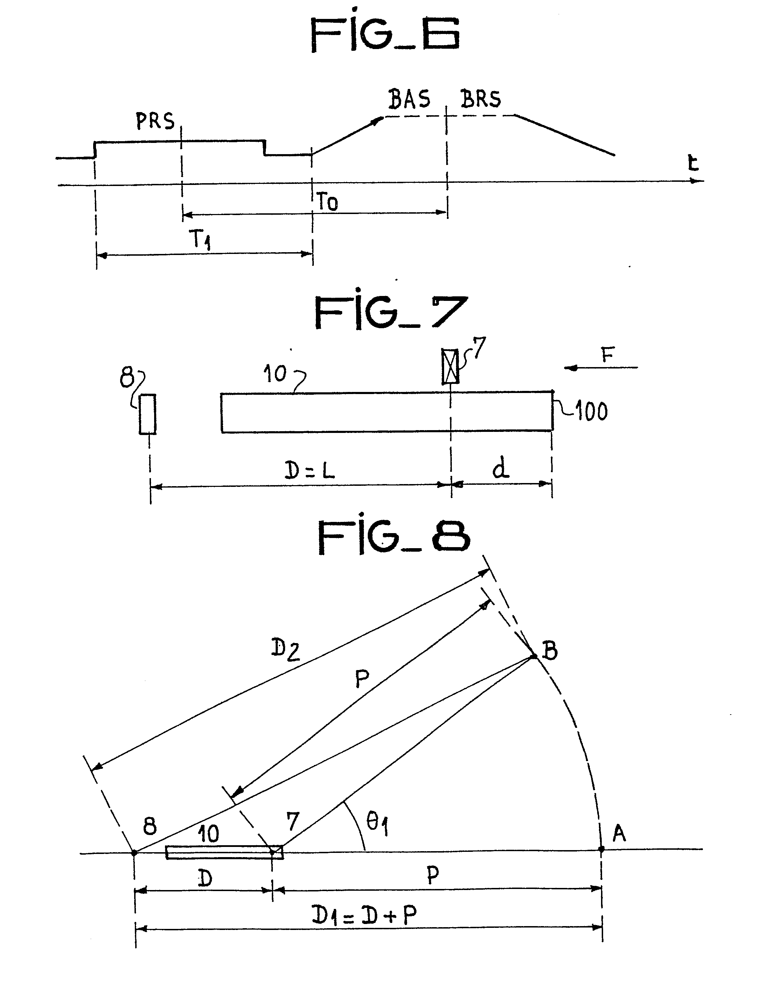

Si les stations site et azimut sont éloignées d'une distance D de l'ordre de quatre kilomètres par exemple, ce qui correspond à une piste d'atterrissage de quatre kilomètres environ, le câble de liaison a une longueur L d'au moins quatre kilomètres. La figure 7 représente cette situation où l'on a indiqué la piste 10, le seuil de la piste 100, le sens de l'atterrissage F, la station site 7 et la station azimut 8.

Un avion situé au seuil de piste reçoit le message site avec un temps de propagation différent en ce qui concerne le préambule et l'information angulaire. Les temps étant référencés à la station azimut :

- le préambule émis par la station azimut se propage dans l'air pendant un temps :

$$t_4 = \frac{D + d}{c}$$

- l'information angulaire émise par la station site sur commande, suivant l'invention, de la station azimut par la liaison de synchronisation 21 (figure 4) se propage donc à la fois sur le câble et dans l'air pendant un temps

$$t_5 = \frac{L}{v} + \frac{d}{c}$$

d étant (figure 7) la distance entre la station site 7 et le seuil de la piste, et c la vitesse des ondes électromagnétiques dans l'air.

Le temps de propagation différentiel $\Delta t = t_5 - t_4$ peut conduire à une erreur correspondante sur la valeur $T_1$ qui a été définie auparavant (figure 6) :

13

$$\Delta t = t_5 - t_4 = \frac{L}{v} - \frac{D}{c}$$

Dans l'exemple numérique considéré, pour L = D = 4 km et $v = \frac{2}{3}$ c on trouve $\Delta t$ = 6,7 µs ; toutefois des valeurs plus importantes peuvent être trouvées si L $\rangle$ D, cas où le trajet du câble n'est pas direct. Cette valeur $\Delta t$ peut être compensée en avançant la commande de synchronisation (circuit 22) au départ de la station azimut d'une valeur équivalente $\Delta t$. Ceci est réalisable à l'aide d'un compteur ou d'un registre à décalage ; cela correspond en fait à retarder d'une valeur $\Delta t$ l'émission du préambule par la station azimut par rapport à l'instant d'émission de l'impulsion de synchronisation à destination de la station site. Une autre solution, qui sera en général préférée consiste à raccourcir le temps de comptage dans la station site : au lieu de compter T1, pour l'intervalle de temps précédemment défini, la station site comptera l'intervalle T1 $-\Delta t$, comme cela a été exprimé précédemment.

En fonction de la position de l'avion dans la couverture du système, un retard différentiel de propagation $\Delta t'$ peut apparaître, en plus du retard $\Delta t$ précédemment étudié et qui est maintenant supposé compensé pour un avion au seuil de la piste. La figure 8 représente un tel cas où par rapport aux stations azimut 8 et site 7, un aéronef peut prendre les deux positions marquées A et B.

La couverture du système MLS considéré fait un angle θ1 d'azimut, par exemple de l'ordre de $\pm$ 40°. La distance oblique entre la station site 7 et le point B soit P = 20 NM = 37 km en distance. On supposera dans ce qui suit que l'antenne site et le seuil de la piste sont confondus, leur distance d étant dans l'exemple considéré de l'ordre de 250 m donc négligeable ici.

Pour l'aéronef en position au point A, l'angle d'azimut est 0°. En supposant que la distance D entre les stations azimut et site est de l'ordre de 4 km, sa distance à la station azimut est

$D_1$ = P + D = 41 km

Pour l'aéronef en position au point B, l'angle d'azimut est θ1 = 40°, un calcul géométrique simple montre que sa distance à la

station est alors $D_2 = 40,1$ km.

$$D_2^2 = D^2 + P^2 - 2 \, DP \cos 140°$$

Il y a ainsi entre les positions A et B de l'aéronef une distance différentielle de $\Delta d = D_1 - D_2 = 0,9$ km correspondant à la vitesse des ondes électromagnétiques à un retard différentiel $\Delta t'$ :

$$\Delta t' = \frac{\Delta d}{C} = 3 \, \mu s$$

Ce retard $\Delta t'$ ne peut être compensé dans l'équipement sol puisqu'il varie dans la couverture MLS ; il reste toutefois bien inférieur à la tolérance $\pm 10$ µs sur To ou T1 des normes internationales.

Dans ce qui précède, on a envisagé les erreurs qui peuvent être considérées sur le temps T1, séparant suivant l'invention, le front de montée du préambule site transmis par la station azimut et le début du balayage aller et retour site émis par la station site sur commande de la station azimut. Ces erreurs se retrouvent avec la même valeur dans le temps $T_o$. Ces erreurs sont l'erreur de réalisation de la liaison de synchronisation azimut-site qui a été vue de l'ordre de $\pm 5$ µs dans l'exemple considéré, l'erreur due à la propagation différentielle au sol $\Delta t$ compensée dans l'équipement sol donc égale à 0 et l'erreur de propagation différentielle dans l'air $\Delta t'$ de l'ordre de $\pm 3$ µs. On constate, en faisant le bilan de ces erreurs, qu'elles restent au total inférieures à la limite tolérée par les normes internationales.

On a ainsi décrit ci-dessus une réalisation préférentielle de l'invention dans laquelle le préambule site est émis par la station azimut.

On peut envisager que le préambule azimut soit émis par la station site qui devient ainsi la station maître, la station azimut devenant la station esclave. Cependant une telle organisation présente l'inconvénient, principalement si les stations site et azimut sont relativement très éloignées l'une de l'autre, que l'information azimut n'est pas disponible tout le long de la piste, par absence de préambule.

Au début de cette description, on a évoqué la possibilité d'émission de données de base et/ou données auxiliaires. Ces données sont généralement émises par la station azimut en utilisant les mêmes circuits que pour l'émission du préambule azimut PRZ. Toutefois, il est envisageable d'utiliser une station données distincte de la station azimut pour l'émission des données. Dans ces conditions, il n'y a plus deux mais trois stations à considérer, soit une station azmut, une station site et une station données.

Dans ce cas, suivant l'invention, c'est la station données qui émet d'une par les données qu'elles soient de base et/ou auxiliaires prévues par le format MLS et d'autre part les préambules des fonctions azimut et site. La station données joue alors le rôle de la station maître, avec deux liaisons de synchronisation, l'une vers la station azimut, l'autre vers la station site.

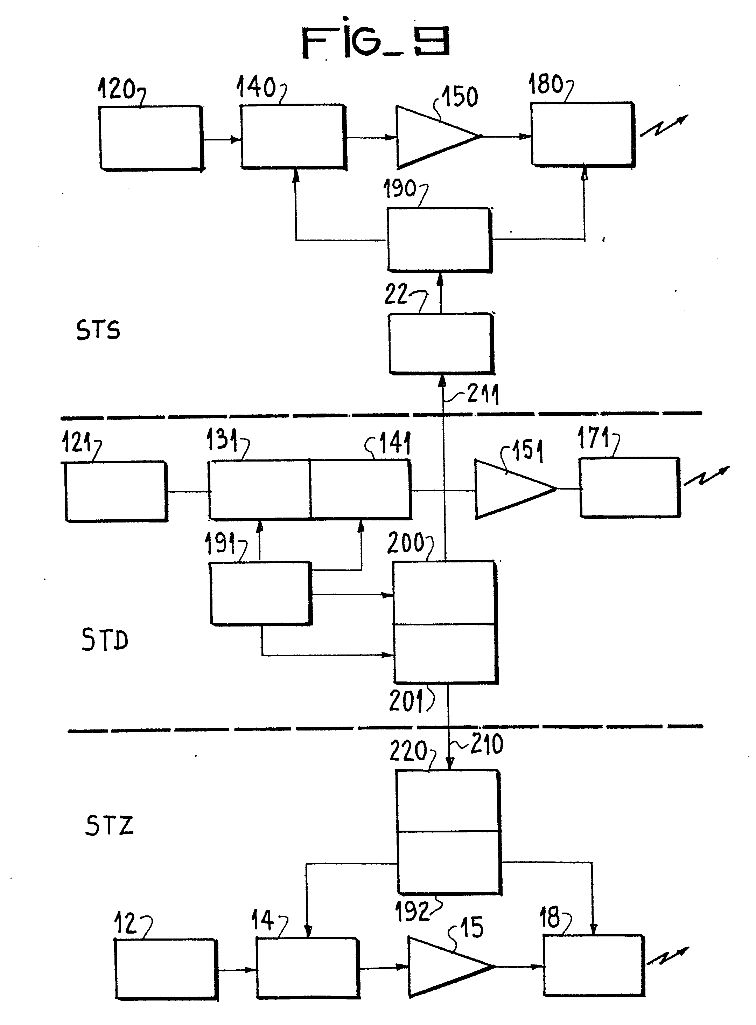

La figure 9 représente de façon schématique l'organisation du dispositif suivant l'invention lorsque trois stations sont envisagées, une station azimut STZ, une station site STS et une station données STD. Dans ce cas, la station données STD est la station maître et les stations azimut et site sont les stations esclaves.

Dans l'ensemble, les différentes stations, principalement les stations azimut et site, ne sont pas très différentes de la station site représentée figure 4 de sorte que les différents repères numériques utilisés dans cette figure se retrouveront dans la figure 9 lorsqu'ils désignent des circuits semblables.

La station azimut STZ de cette figure 9 qui est donc dans ce cas une station esclave comporte les circuits suivants : un générateur de fréquence 12 suivi d'un commutateur d'arrêt marche 14 et d'un amplificateur de puissance 15, alimentant l'antenne à balayage azimut 18. Une électronique de commande 192 contrôle le commutateur 14 et l'antenne 18, sous le contrôle d'un circuit 220 dit de réception de synchro azimut, qui reçoit de la station maître, en l'occurrence ici la station données STD, un top de synchronisation par la voie 210, indiquant que le préambule du message azimut ayant été émis, la station azimut peut émettre l'information spécifique azimut.

La station site STS comprend les mêmes circuits que la station azimut, c'est-à-dire un générateur de fréquence 120 suivi d'un commutateur d'arrêt-marche 140 d'un amplificateur de puissance 150 connecté à l'antenne à balayage site 180. Une électronique de commande 190 contrôle le commutateur 140 et l'antenne 180, sous le contrôle d'un circuit 22 dit de réception-synchro site. Ce circuit reçoit de la station données, maître, un top de synchronisation par la voie 211 indiquant que le préambule du message site a été émis et que la station site peut émettre le message spécifique site.

La station données comporte les circuits suivants : un générateur de fréquence 121, suivi d'un modulateur de phase 131, d'un commutateur d'arrêt-marche 141, d'un amplificateur de puissance 151 et d'une antenne sectorielle 171. Suivant l'invention, le modulateur de phase génère les préambules des messages données, azimut et site, sous le contrôle de l'électronique de commande 191 qui contrôle le commutateur arrêt-marche 141.

Suivant l'invention également, l'électronique de commande 191 commande l'émission d'impulsions de synchronisation par les circuits 200 et 201 pour indiquer aux stations site et azimut respectivement que les préambules de leurs messages ont été émis. Comme indiqué précédemment, ces impulsions sont reçues dans les stations site STS et azimut STZ par les circuits récepteurs 22 et 220 respectivement. On notera que le message données est transmis par l'antenne sectorielle 171.

La station données se trouve généralement au voisinage de la station azimut, de manière à assurer une réception des données et des préambules sur la piste.

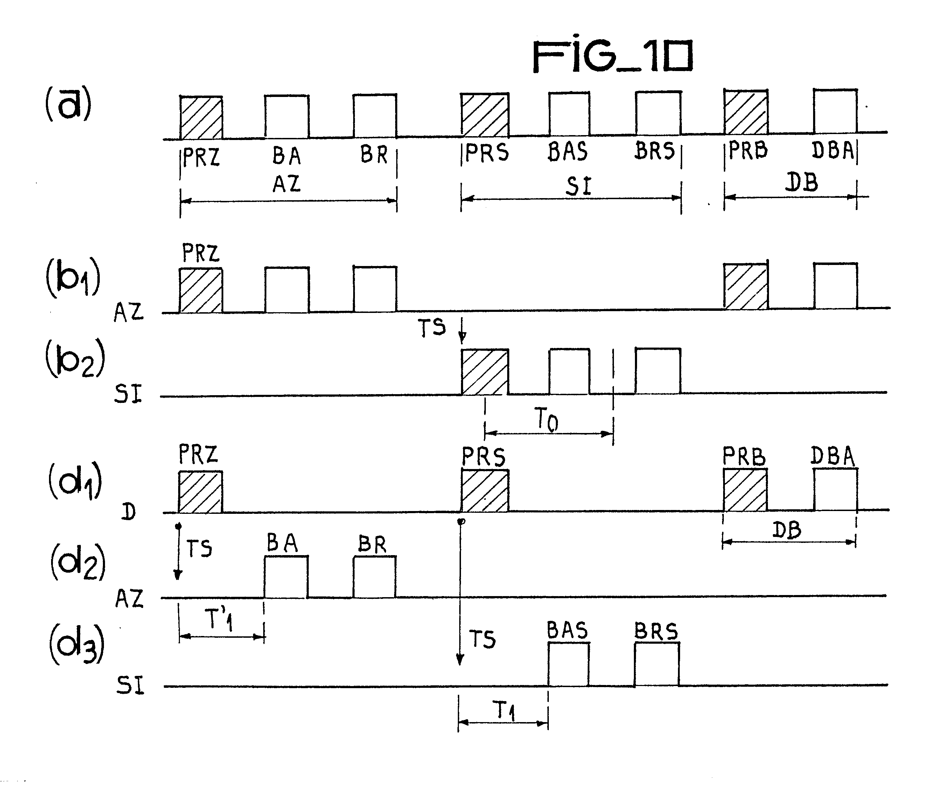

La figure 10 donne une représentation schématique temporelle des différents signaux émis par les trois stations d'un système MLS suivant l'invention. Les figures 10a, 10b1 et 10b2 sont identiques aux figures 5a, 5b1 et 5b2 déjà décrites et les figures 10d1, 10d2 et 10d3 représentent les signaux émis conformément à l'invention dans le cas de trois stations.

La figure 10d1 représente le signal D émis par la station données et comportant successivement le préambule PRZ de la fonction azimut, le préambule PRS de la fonction site et enfin les données de base DB constituées par un préambule PRB et les données proprement dites DBA. La figure 10d2 représente le signal AZ émis par la station azimut avec le top de synchronisation TS en provenance de la station données et la figure 10d3 représente le signal SI émis par la fonction site avec le top de synchronisation TS en provenance également de la station données. Dans le cas de la station azimut (figure 10d2), le temps T1 devient T'1, défini par les normes internationales.

On a ainsi décrit un système d'atterrissage hyperfréquence à stations site et azimut séparées dans lequel une des stations est maître et l'autre esclave. On a également décrit un système d'atterrissage hyperfréquence comportant trois stations, l'une étant maître et les deux autres esclaves.

# REVENDICATIONS

1.  Système d'atterrissage hyperfréquence à stations site et azimut séparées fournissant à un aéronef sa position en coordonnées sphériques, angle d'azimut et angle de site comportant chacun un préambule donnant l'identité du message qui suit et le message spécifique d'information angulaire proprement dit, caractérisé en ce qu'une seule des deux stations (7, 8) émet, en plus de son message, le préambule du message spécifique normalement émis par l'autre station, l'émission de ce préambule étant associée à l'émission d'un signal de synchronisation vers la station émettant ensuite le message spécifique d'information angulaire correspondant audit préambule.

2.  Système d'atterrissage hyperfréquence comportant une station azimut et une station site séparées et une station dite station données émettant des messages particuliers constitués comme les messages azimut et site d'un préambule suivi du message de données proprement dit, caractérisé en ce qu'une seule des trois stations émet en plus de son message, les préambules des messages spécifiques normalement émis par les deux autres station, l'émission de ces préambules étant associée à l'émission d'un signal de synchronisation vers l'une et l'autre station émettant ensuite le message spécifique d'information correspondant auxdits préambules.

3.  Système d'atterrissage suivant la revendication 1, caractérisé en ce que la station azimut émet le préambule du message site.

4.  Système d'atterrissage suivant la revendication 1, caractérisé en ce que la station site émet le préambule du message azimut.

5.  Système d'atterrissage suivant la revendication 2, caractérisé en ce que la station données émet en plus de son message, successivement les préambules des messages azimut et site respectivement, l'émission de chacun de ces préambules étant associée à l'émission d'un signal de synchronisation respectivement vers la station émettant le message spécifique azimut et vers la station émettant le message spécifique site.

6. Système d'atterrissage suivant l'une des revendications 1 et 2, caractérisé en ce que l'antenne sectorielle (5) de la station émettant les préambules est contrôlée par une électronique de commande (19) comportant un dispositif de séquencement dans le temps des différentes opérations à effectuer.

7. Système d'atterrissage suivant la revendication 6, caractérisé en ce que le dispositif de séquencement est un microprocesseur.

8. Système d'atterrissage suivant l'une des revendications 1 à 5, caractérisé en ce que la station émettant les préambules comporte un dispositif de synchronisation (20) de précision, émettant à destination des autres stations respectivement, une impulsion de synchronisation au début du préambule émis, ouvrant l'intervalle de temps (T1) séparant ledit préambule du début du balayage électronique effectué par une antenne à balayage électronique aux stations émettant les messages suivant lesdits préambules, lesdites stations comportant un récepteur de synchronisation connecté à une électronique de commande (190) comportant un compteur ou un microprocesseur, ladite électronique de commande (190) commandant l'exécution du balayage aller-retour de l'antenne à balayage électronique associée.

9. Système d'atterrissage suivant la revendication 8, caractérisé en ce que l'intervalle de temps (T1) séparant le début du préambule d'un message, du début du balayage aller-retour est corrigé de l'intervalle de temps $\Delta t$ séparant la réception par un aéronef, après propagation dans l'air du préambule d'une part et après propagation dans l'air et dans la liaison entre le dispositif de synchro et le récepteur de synchro du message angulaire correspondant au préambule d'autre part, cette correction étant effectuée dans l'électronique de commande (19) par avance de la commande de synchronisation (20) de ladite valeur $\Delta t$.

10. Système d'atterrissage suivant la revendication 9, caractérisé en ce que la correction est faite à la station émettant l'information angulaire, comptant un temps $T1 - \Delta t$.

0082770

1/7

FIG_1

FIG_2

(a)  (b)

(c)

# FIG_3

(a)

F →

7

8

9

10

100

AZ     SI     DB     DA

(b)

(C)

PRZ   BA   BR   PRS   BAS   BRS   PRB   DBA

0 ————————————————————→ t

FIG_4

3/7

0082770

FIG_5

4/7

0082770

# FIG_6

PRS

BAS BRS

$T_0$

$T_1$

$t$

# FIG_7

8

10

7

F

$D = L$

d

100

# FIG_8

$D_2$

P

B

8

10

7

$\theta_1$

A

D

P

$D_1 = D + P$

FIG_9

0082770

STS

STD

STZ

FIG_1

Office européen
des brevets

**RAPPORT DE RECHERCHE EUROPEENNE**

**0082770**
Numéro de la demande

EP  82 40 2304

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | FR-A-2 440 628  (BENDIX CORPORATION) *Page 1, ligne 35 - page 4, ligne 23; page 6, ligne 17 - page 10, ligne 23; figures 1-3* | 1 | G 01 S    1/04 G 01 S    1/56 |
| | --- | | |
| D,A | MICROWAVE JOURNAL, vol. 24, no. 5, mai 1981, pages 113-120, Dedham (USA); B.LETOQUART: "The MLS in France". *Page 118, colonne de gauche, l'alinéa intitulé: "Time sequence control microprocessor"* | 1,6,7 | |
| | --- | | |
| D,A | NAVIGATION, vol. 29, no. 114, avril 1981, pages 174-187, Paris (FR); B.LETOQUART  et al.: "Le MLS - Un exemple   d'utilisation   du microprocesseur" *Pages 179-187: les parties 2 (Le microprocesseur dans le MLS) et 3 (Description du systéme microprocesseur de la station sol azimut)* | 1,6,7 | DOMAINES TECHNIQUES RECHERCHES (Int. Cl. ³) G 01 S |
| | --- | | |
| A | NEC RESEARCH AND DEVELOPMENT, no. 59, octobre 1980, pages 34-45, Tokyo (JP); G.ONODERA et al.: "Development of approach elevation equipment in MLS". *En entier* | 1 | |
| | ---            -/- | | |

Le présent rapport de recherche a été établi pour toutes les revendications

| Lieu de la recherche **LA HAYE** | Date d'achèvement de la recherche **14-03-1983** | Examinateur **OLDROYD D.L.** |
|---|---|---|

**Office européen des brevets**

**RAPPORT DE RECHERCHE EUROPEENNE**

**0082770**
Numéro de la demande

EP 82 40 2304

| **DOCUMENTS CONSIDERES COMME PERTINENTS** | | | Page 2 |
|---|---|---|---|
| Catégorie | Citation du document avec indication, en cas de besoin, des parties pertinentes | Revendication concernée | CLASSEMENT DE LA DEMANDE (Int. Cl. ³) |
| A | IEEE TRANSACTIONS ON MICROWAVE THEORY AND TECHNIQUES, vol. MTT-24, no. 12, décembre 1976, pages 964-971, New York (USA); R.M.COX et al.: "MLS- A practical application of microwave technology". *En entier* <br><br> ----- | 1 | |
| | | | **DOMAINES TECHNIQUES RECHERCHES (Int. Cl. ³)** |

Le présent rapport de recherche a été établi pour toutes les revendications

| Lieu de la recherche | Date d'achèvement de la recherche | Examinateur |
|---|---|---|
| LA HAYE | 14-03-1983 | OLDROYD D.L. |